# EUROPEAN PATENT APPLICATION

(11) **EP 2 889 238 A1**
(43) Date of publication of application: **01.07.2015**
(21) Application number: 13199882.5
(22) Date of filing: 31.12.2013
(51) Int. Cl.: B65G 47/86, B65G 54/02, B67C 7/00

(54) **Transfer device for transferring articles along a path**

(71) Applicant: Sidel S.p.a. Con Socio Unico, Parma (IT)
(72) Inventor: Montanari, Michele, 43100 PARMA (IT)
(74) Representative: Di Sciuva, Michele

(57) **Abstract**

There is a transfer device (1; 1'; 1"; 1a"', 1b"'; 1a"", 1b"", 1c"") for transferring at least two articles (5) along a path (P; P'; P"; P"'; P1""; P2""; P3""), comprising: a stationary track (2; 2'); and at least two transfer elements (3), which are self-movable along track (2, 2') and movable independently of each other along path (P; P'; P"; P"'; P1""; P2""; P3""), from a receiving section (I; I'; I"; I"'; I"") in which they receive respective articles (5) and a discharging section (0; O' ; O"; O"'; O"") in which they discharge respective articles (5); transfer device (1; 1'; 1"; 1a"', 1b"'); 1a"", 1b"", 1c"") further comprises: at least two gripping members (4) for gripping respective articles (5), which are operatively connected to respective transfer elements (3), and are movable along path (P; P'; P"; P"'; P1""; P2""; P3""); gripping members (4) also support articles (5), as the latter travel along path (P; P'; P"; P"'; P1""; P2""; P3"").

## Description

The present invention relates to a transfer device for transferring articles along a path.

As is known, many liquid or powder products including not only food products such as milk, fruit juices or beverages in general, but also mineral lubricating or detergent oils are sold in articles having different shapes and size.

These articles are manufactured starting from respective pre-forms in production assemblies.

The production assemblies comprise a plurality of units, each of which carries out a respective operation on the pre-forms or the articles.

In greater detail, the known production assemblies generally comprise, proceeding along the advancing direction of the pre-forms/articles,:
- an oven for heating a plurality of pre-forms;
- a blowing unit for blowing the articles, starting from respective pre-forms;
- a rinsing unit for rising the articles;
- a filling unit for filling the articles with the pourable food product;
- a capping unit for applying a plurality of caps onto respective article; and
- a labelling unit for labelling the articles with respective labels.

When designed to achieve high throughput, the filling unit and the labelling unit are generally rotary units.

In greater detail, the rotary units comprise:
- a stator; and
- a carousel, which rotates with respect to the stator and is provided, at the outer periphery thereof, with a plurality of operative heads, in particular filling devices or labelling devices.

The carousel further comprises a plurality of supporting elements for supporting the articles along an arc-shaped operative path. In particular, the supporting elements are gripping devices in the case of the filling unit and mandrels in case of the labelling unit.

The supporting elements receive the articles to be filled/labelled at an inlet station of the operative path, move the articles integrally with the carousel and in correspondence of the respective operative heads along the conveying path, and discharge the filled/labelled articles at an outlet station of the operative path.

In particular, the articles are labelled/filled, as they move integrally with the carousel.

The production assemblies further comprise a plurality of transfer devices for transferring the pre-forms/article between these rotary units or for feeding the article to these rotary units or for feeding the articles outside the production assemblies.

In greater detail, the transfer devices are generally star wheels or linear conveyors provided with worm-screws.

More precisely, the star wheels comprise a plurality of circumferential seats adapted to receive respective articles.

For example, an infeed star wheel is used for feeding the rotary units with the articles to be filled/labelled as well as an out-feed star wheel is used for receiving from the rotary units the filled/labelled articles.

Linear conveyors are generally used together with worm-screws, so as to feed the articles with a given pitch therebetween.

In particular, when conveyed by the linear conveyor, the articles come into a position of in-line mutual contact. In order to address the problem of separating the articles from their position of mutual contact so that they can be taken up by the seats of the star wheel, the worm-screw is usually located at a location adjacent to the linear conveyor. The worm screw extends alongside the linear conveyor and is arranged to mesh with the contour of the articles to feed them smoothly and continuously into the seats of the star wheels.

Even well performing, the known star-wheels and worm-screw leave room for improvement, mainly due to the fact that they convey articles with a fixed speed and with a fixed pitch.

Accordingly, when it is necessary to change the pitch between the articles and/or to vary the speed of the articles, it is necessary to completely redesign the feeding devices and/or the layout of the production assembly.

Furthermore, when the production assembly stops upstream of the blowing unit, a certain number of pre-forms must be discharged outside the production assembly and are therefore wasted.

Finally, the labelling unit and the capping unit generally have different throughput rate and process articles with different pitch. Accordingly, every time the format, e.g. the size, of the article changes, it is necessary to set-up again the capping unit and the labelling unit.

A need is felt within the industry to enhance the flexibility of the transfer of the articles.

Furthermore, the known production assemblies comprise:
- a plurality of first transfer assemblies, which are interposed between the oven and an infeed station of the blowing unit; and
- a plurality of second transfer assemblies, which are arranged at the out-feed station of the blowing unit and are adapted to allow the discharge of the articles from the blowing unit.

Both the first and the second transfer assemblies comprise a high number of complex mechanical components, e.g. turntables.

A need is felt within the industry to simplify as far as possible the feeding of the blowing station with the pre-forms and the discharge of the articles from the blowing station.

Finally, the rotary conformation of the filling unit and/or the labelling unit calls for supplying air and/or gas and/or the food product and/or the labels to the rotating operative heads, thus inevitably increasing the overall complexity of the resulting filling unit and/or labelling unit.

A need is felt to preserve the high rate of the rotary filling unit and labelling unit while, at the same time, reducing their constructive complexity.

US-A-2012/0261233 discloses a transfer device for transferring articles or group of articles.

In greater detail, the transfer device shown in US-A-2012/0261233 comprises:
- a first conveyor, which supports the base of the articles and moves at constant speed along a rectilinear conveying path; and
- a pair of second conveyors facing one another on the opposite side of the conveying path.

The second conveyors comprise respective transfer elements which laterally cooperate with respective opposite side of the articles.

The second conveyors move independently to each another, so that the articles can be transferred independently from one another along the rectilinear conveying path.

A drawback of that transfer device is that it can only convey articles or group of articles along a rectilinear path.

It is an object of the present invention to provide a transfer device for transferring articles along a path allowing to meet at least one of the aforementioned needs in a simple and cost-effective manner.

The aforementioned object is achieved by a transfer device for transferring articles according to claim 1.

The present invention also relates to a filling unit according to claim 13.

The present invention also relates to a labelling unit according to claim 14.

One preferred embodiment is hereinafter disclosed for a better understanding of the present invention, by way of non-limitative example and with reference to the accompanying drawings, in which:
- Figure 1 is a schematic view of a transfer device made according to the present invention;
- Figure 2 is a perspective view of the transfer device of Figure 1, with parts removed for clarity;
- Figure 3 is a schematic view of a first embodiment of a production assembly for producing filled articles, into which the transfer device of Figures 1 and 2 has been incorporated;

- Figure 4 is a schematic view of a second embodiment of the production assembly, into which the transfer device of Figures 1 and 2 has been incorporated;
- Figure 5 is an enlarged view of the transfer device incorporated in the production assembly of Figure 4, in an enlarged scale;
- Figure 6 shows a third embodiment of the production assembly, into which the transfer device of Figures 1 and 2 has been incorporated;
- Figure 7 shows a fourth embodiment of the production assembly, into which the transfer device of Figures 1 and 2 has been incorporated; and
- Figure 8 shows a fifth embodiment of the production assembly, into which the transfer device of Figures 1 and 2 has been incorporated.

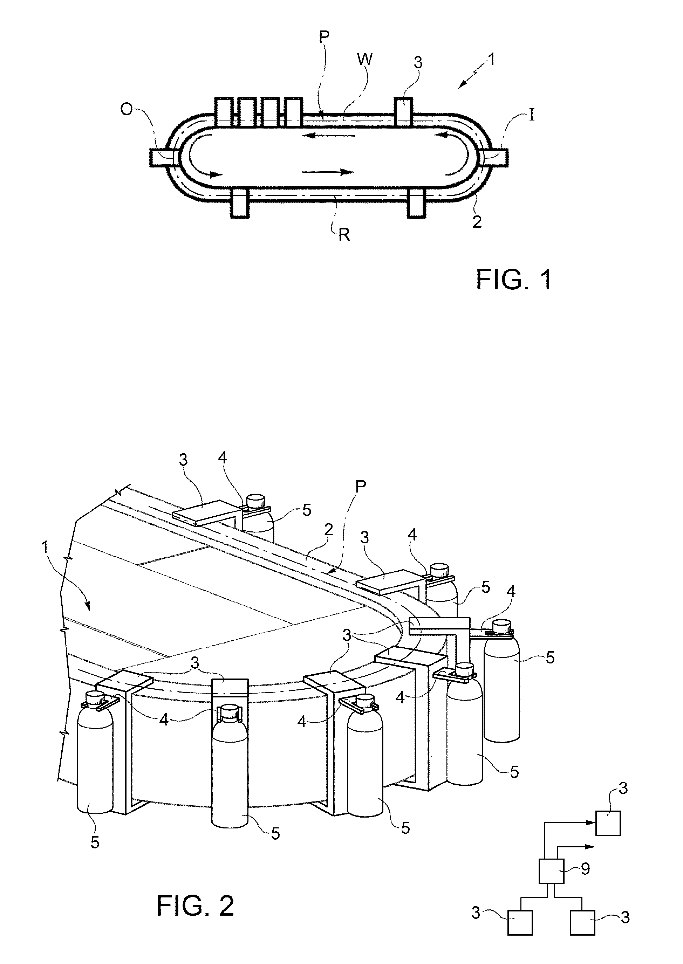

With reference to Figures 1 to 2, numeral 1 indicates a transfer device for transferring articles 5 (shown only in Figure 2).

Articles 5 can be made of glass or plastic.

Preferably, articles 5 are filled with a pourable food product.

Transfer device 1 comprises:
- a stationary track 2;
- a plurality of transfer elements 3, which are self-movable on track 2 and movable independently of each other along a path P; and
- a control unit 9 (only schematically shown in Figure 2) for controlling each transfer element 2 independently of other transfer elements 2.

Advantageously, transfer device 1 comprises a plurality of gripping members 4 (schematically shown only in Figure 2), which are associated to respective transfer elements 3 and are adapted to grip respective articles 5 and support respective articles 5, as the latter travel along path P.

Each transfer element 3 moves along a closed path P, which comprises a work portion W and a return portion R.

In greater detail, work portion W extends from:
- an inlet station I, at which respective gripping member 4 receives article 5; and
- an outlet station O, at which respective gripping member 4 discharges article 5.

Return portion R extends from outlet station O to inlet station I.

Furthermore, each transfer element 3 moves along track 2 at a speed, which is independent from the speeds of the other transfer elements 3.

Each gripping member 4 is movable between an open configuration in which it receives/discharges respective article 5 at stations I, 0, and a closed configuration in which it firmly grips respective article 5 and conveys it along path P.

For example, each gripping member 4 could comprise a frame and a pair of jaws hinged to the frame about respective axes parallel to each other.

Gripping members 4 receive respective articles 5 at an inlet station I of path P, convey respective article 5 along a work portion W of path P and discharge respective articles 5 at outlet station O of path P.

Work portion W can assume any shape. In particular, work portion W can be curved, so that articles 5 can be transferred by transfer device 1 along partially curved trajectory.

Preferably, transfer device 1 comprises only one track 2. Furthermore, each article 5 is conveyed along work portion W by only one respective gripping member 4 carried by only one transfer elements 3.

In the embodiment shown, track 2 houses a stator armature formed by a plurality of individually-excitable solenoids (known per se), and transfer elements 3 house respective permanent magnets (known per se and only and independently moved along track 2 by individually controlling the solenoids by means of control unit 9.

In the embodiment shown, path P and track 2 are shaped as respective substantially coincident ellipses.

Work portion W corresponds to an half of the ellipse and return portion R correspond to the other half of that ellipse.

Still more precisely, work portion W and return portion R comprise, each,: a rectilinear main section and a pair of end curved sections opposite to each other.

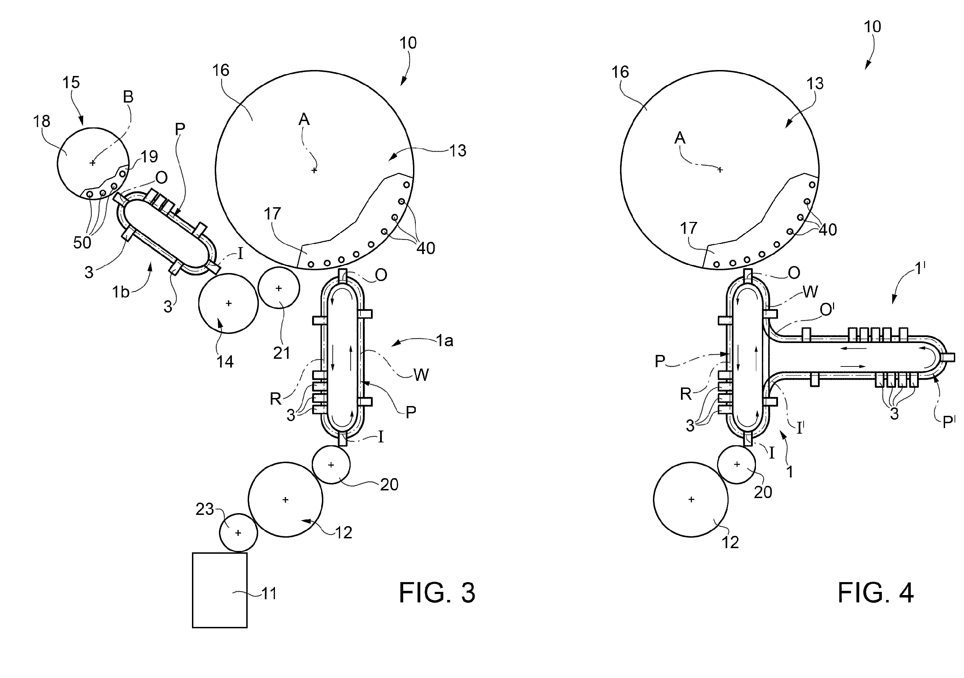

With reference to Figure 3, numeral 10 indicates a first embodiment of production assembly for producing articles 5 starting from respective not-shown pre-forms.

Assembly 10 substantially comprises, proceeding along an advancing direction of pre-form or articles 5,:
- an oven 11 for heating pre-forms;
- a blowing unit 12 for forming articles 5;
- a filling unit 13 for filling articles 5 with the pourable product;
- a capping unit 14 for applying relative caps to respective filled articles 5; and
- a labelling unit 15 for labelling capped and filled articles 5 with respective labels.

In the embodiment shown, filling unit 13 substantially comprises:
- a stator 16;
- a not-shown tank, which is filled with the pourable product; and
- a rotor 17 (only schematically shown in Figure 3), which comprises a plurality of filling heads 40 (only schematically shown in Figure 3) and rotates about an axis A with respect to the stator 16.

Still more precisely, filling heads 40 can be selectively arranged either:
- in respective closed configurations, in which they prevent the flow of the pourable product from tank to articles 5 arranged underneath them; or
- in respective open configurations, in which they allow the flow of the pourable product from tank to articles 5 arranged underneath them.

In particular, as they fill articles 5 with the pourable product, filling heads 40 integrally rotate about axis A with articles 5.

Labelling unit 15 substantially comprises:
- a stator 18;
- a not-shown storage housing labels; and
- a rotor 19, which comprises a plurality of labelling heads 50 rotating about an axis B with respect to stator 18.

Still more precisely, labelling heads 50 can be selectively arranged either:
- in respective rest configurations; or
- in respective operative configurations, in which they apply respective labels onto respective articles 5.

In particular, as they apply labels onto respective articles 5, labelling heads 50 integrally rotate about axis B with articles 5.

In the embodiment shown, axes A, B are parallel to each other and transversal to path P. Still more precisely, path P is horizontal and axes A, B are vertical, in use.

Assembly 10 further comprises:
- a transfer group 23, which transfers pre-forms from oven 11 to blowing unit 12;
- a star wheel 20, which receives articles 5 to be filled from blowing unit 12; and
- a first transfer device 1a, which receives articles 5 to be filled from star wheel 20 at inlet station I, conveys articles 5 to be filled along path P and discharges articles 5 to be filled to filling unit 13 at outlet station O.

Furthermore, assembly 10 comprises:
- a star wheel 21, which receives filled articles 5 from filling unit 13 and transfers filled articles 5 to be capped to capping unit 14; and
- a second transfer device 1b, which receives capped and filled articles 5 to be labelled from capping unit 14 at inlet station I of path P, conveys filled and capped articles 5 still to be labelled along path P, and discharges filled and capped articles 5 still to be labelled to labelling unit 15 at outlet station O of path P.

In particular, during the acceleration or deceleration steps, labelling unit 15 and capping unit 14 may operate, for a limited lapse of time, at different speeds and/or with different pitches.

Control unit 9 controls the speed of transfer elements 3 of second transfer device 1 along track 2 independently of one another, so as to recover the difference of throughput and pitch between capping unit 14 and labelling unit 15.

In use, oven 11 heats pre-forms, which are conveyed by transfer group 23 to blowing unit 12.

Articles 5 are blown from respective pre-forms inside blowing unit 12 and are transferred to star wheel 20.

Transfer elements 3 of transfer device 1a receive article 5 from star wheel 20 at station I, convey articles 5 along work portion W of relative path P and feeds filling unit 13 with articles 5 at station O of relative path P.

Filling unit 13 fills articles 5 with the pourable product and feeds star wheel 21 with filled articles 5 still to be capped and labelled.

Star wheel 21 transfers filled articles 5 from filling unit 13 to capping unit 14, where filled articles 5 are capped.

Transfer elements 3 of transfer device 1b receive respective filled and capped articles 5 from star wheel 21 at station I, convey respective articles 5 along work portion W of relative path P and feeds labelling unit 15 with capped and filled articles 5 still to be labelled at station O of relative path P.

Labelling unit 15 is fed with capped and filled articles 5 by relative transfer elements 3 of transfer device 1b and applies relative labels onto relative articles 5.

With reference to Figures 4 and 5, 10' indicates, as a whole, a second embodiment of a production assembly for the production of articles 5 incorporating transfer device 1 according to the present invention.

Production assembly 10' is similar to production assembly 10 and will be described hereinafter only as far as it differs therefrom; corresponding or equivalent parts of production assemblies 10, 10' will be indicated where possible by the same reference numbers.

In particular, production assembly 10' differs from production assembly 10 for comprising a storage transfer device 1'. In greater detail, storage transfer device 1' comprises an additional track 2' onto which transfer devices 3 can selectively move.

In detail, track 2' defines a further optional storage path P' for articles 5 travelling onto path P.

Path P' extends from an inlet station I' to an outlet station O'.

Furthermore, path P' comprises:
- a first end portion, which is curved and is joined to work portion W of path P at inlet station I';
- a second end portion, which is opposite to the first end stretch and is joined to work portion W of path P at outlet station O'; and
- a main portion, which extends between inlet station I' and outlet station O'.

In the embodiment shown, inlet station I' and outlet station O' are arranged on the rectilinear main section of work portion W of path P.

Furthermore, the main portion of path P' is U-shaped.

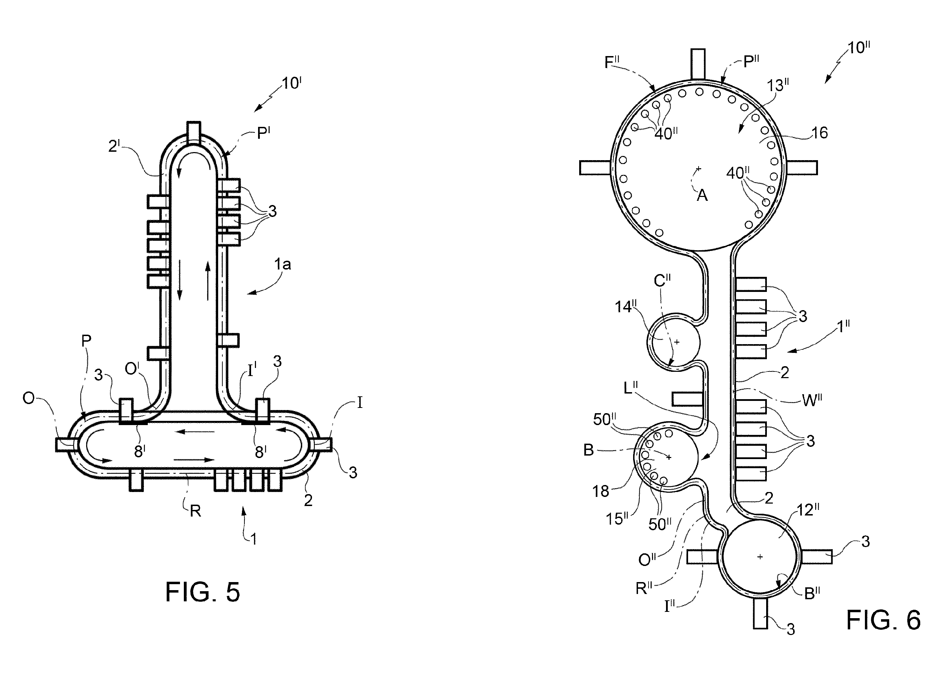

In particular, path P is connected to path P' at stations I', O' by respective selectively operable switches 8' (only schematically shown in Figure 5), which can be set, each, either in a first configuration in which it keeps disconnected paths P, P' at stations I', O' or in a second configuration in which it connects paths P, P' at stations I', O'.

The operation of production assembly 10' is similar to production assembly 10 and is described only insofar as it differs from that of production assembly 10.

In particular, transfer elements 3 of transfer device 1' and, therefore, gripping elements 4 normally move along path P and do not move along path P', when both production assembly 10' normally operates and when switches 8' are in respective first configurations, as shown in Figure 5.

In case of a temporary interruption of the operation of production assembly 10' downstream of blowing unit 12 with reference to the advancing direction of articles 5 inside production assembly 10', transfer elements 3 can be slowed down or even stored inside storage path P' by arranging switches 8' in respective second configurations, as shown in Figure 6.

Still more precisely, transfer elements 3 enters storage path P' at inlet station I' and outputs storage path P' at outlet station O', when the operation of production assembly 10' downstream of blowing unit 12 restarts again (Figure 5).

In this way, it is no longer necessary discharge a certain number of pre-forms, in case of interruption of the operation of production assembly 10' downstream of blowing unit 12 (Figure 5).

With reference to Figure 6, 10" indicates, as a whole, a third embodiment of a production assembly for the production of articles 5 incorporating transfer device 1 according to the present invention.

Production assembly 10" is similar to production assembly 10 and will be described hereinafter only as far as it differs therefrom; corresponding or equivalent parts of production assemblies 10, 10" will be indicated where possible by the same reference numbers.

Production assembly 10" differs from production assembly 10 for comprising only one transfer device 1", which defines only one path P" for articles 5 inside production assembly 10".

In greater detail, each transfer element 3 receives relative pre-form at station I", conveys relative pre-from or article 5 along operative portion W" inside blowing unit 12, filling unit 13", labelling unit 15" and capping unit 14", and discharges filled, labelled and capped articles 5 at station O" to a further not-shown conveyor, which conveys articles 5 outside packaging assembly 10".

Still more precisely, portion W" comprises, proceeding from station I" to station O",:
- a blowing section B", which extends inside blowing unit 12;
- a filling section F", which extends inside filling unit 13";
- a capping section C", which extends inside capping unit 14"; and
- a labelling section L", which extends inside labelling unit 15".

Transfer elements 3 are controlled by control unit 9 to move back without relative articles 5 from station O" to inlet station I" along return portion R" of path P".

Filling unit 13" differs from filling unit 13 in that stator 16 supports a plurality of filling heads 40" which are arranged peripherally about axis A" of filling unit 13".

Advantageously, filling heads 40" are either stationary with respect to axis A" or movable independently and separately from articles 5 travelling along filling section F" of path P".

In particular, in case they move independently from articles 5 travelling along filling section F", filling heads 40" could be transported by a further not-shown transfer device.

When transferring gripping devices 4 and corresponding articles 5 to be filled along filling section F" of path P", transfer elements 3 are controllable by control unit 9 to:
- stop/arrange articles 5 substantially underneath filling heads 40" before the filling of articles 5 and for the time necessary to fill articles 5 with the pourable product; and
- convey filled article 5 outside filling unit 13".

Filling heads 40" are set in the closed position when transfer elements 3 advance relative articles 5 along filling section F" upstream or downstream of such filling heads 40".

Filling heads 40" are set in the open position after transfer elements 3 have stopped/arranged relative articles 5 underneath such filling heads 40".

In this way, as they stop along filling section F", articles 5 are filled with the pourable product.

Labelling unit 15" differs from labelling unit 15 in that labelling heads 50" are arranged peripherally about axis B" and are either stationary with respect to axis A" or movable independently and separately from articles 5 travelling along labelling section L" of path P".

In particular, in case they move independently from articles 5 travelling along labelling section L", labelling heads 50" could be transported by a further not-shown transfer device.

Labelling heads 50" can be set in a rest configuration or in an operative configuration, in which they apply respective labels to relative articles 5.

When transferring gripping devices 4 and corresponding filled articles 5 to be labelled along labelling section L" of path P", transfer elements 3 are controllable by control unit 9 to:
- stop/arrange articles 5 at relative labelling heads 50" before the labelling of articles 5 and for the time necessary to apply labels onto respective articles 5; and
- convey filled and labelled article 5 outside labelling unit 15".

Labelling heads 50" are set in the rest position when transfer elements 3 advance relative articles 5 along labelling section L" upstream or downstream thereof.

Labelling heads 50" are set in the operative position after transfer elements 3 have stopped/arranged relative articles 5 in correspondence thereof.

In this way, as they move along labelling section L", articles 5 are labelled.

In particular, labelling heads 50" could be adapted to apply and release pre-formed and longitudinally sealed "sleeve" labels onto respective articles 5, while the latter are raised parallel to a vertical axis.

The operation of production assembly 10" is similar to production assembly 10 and is described only insofar as it differs from that of production assembly 10.

In particular, each transfer element 3 of transfer device 1" transfers a relative pre-form/article 5 along portion W" of path P" from station I" to station O" and moves back without relative article 5 along portion R" of path P" from station O" to station I".

Still more precisely, each transfer element 3 conveys relative pre-form along blowing section B" and relative article 5 along filling section F", labelling section L" and capping section C".

Filling heads 40" are normally set in respective closed configurations.

Along filling section F", control unit 9 controls transfer elements 3, so as to stop/arrange them underneath filling heads 40". In this condition, filling heads 40" are set in the respective open configurations, so as to fill relative articles 5 with the pourable product.

After the filling of articles 5 has been completed, filling heads 40" are set again in the respective closed configurations. At this stage, control unit 9 moves again transfer elements 3 along filling section F", so as to move away respective filled articles 5 from filling unit 13".

Along labelling section L", control unit 9 controls transfer elements 3, so as to stop/advance at labelling heads 50". In this condition, labelling heads 50" are set in the respective operative configurations, so as to apply labels onto relative articles 5.

After the filling of articles 5 has been completed, labelling heads 50" are set again in the respective rest configurations. At this stage, control unit 9 moves again transfer elements 3 along labelling section L", so as to move away transfer elements 3 from labelling unit 15".

According to a not shown alternative, station I" could be arranged downstream of blowing unit 12". In this alternative, each transfer element 3 of transfer device 1" conveys respective article 5 only along filling section F", labelling section L" and capping section C".

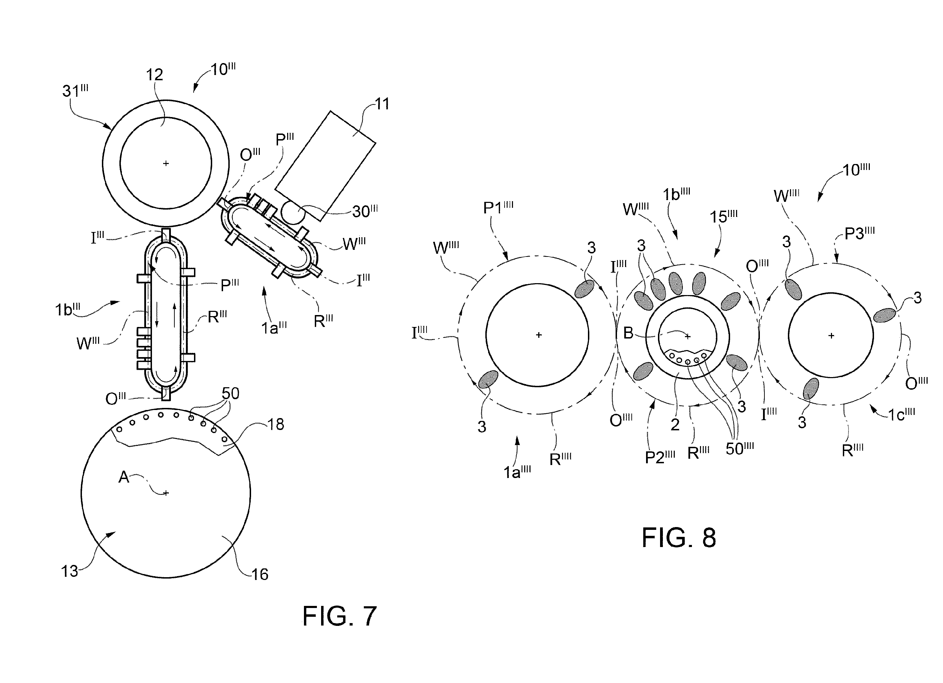

With reference to Figure 7, 10"' indicates, as a whole, a fourth embodiment of a production assembly for the production of articles 5 incorporating transfer device 1 according to the present invention.

Production assembly 10"' is similar to production assembly 10 and will be described hereinafter only as far as it differs therefrom; corresponding or equivalent parts of production assemblies 10, 10"' will be indicated where possible by the same reference numbers.

Production assembly 10"' differs from production assembly 10 for comprising, proceeding from oven 11 to blowing unit 12:
- a star wheel 30"', which receives pre-forms from oven 11;
- a first transfer device 1a"', which receives at inlet station I"' pre-forms by star wheel 30"', conveys pre-forms along work portion W"' of path P"' and directly feeds blowing unit 12 with pre-forms; and
- a star wheel 31"', which is directly fed by transfer device 1a"' at outlet station O"' with pre-forms and which conveys pre-forms along a blowing path inside blowing unit 12.

More precisely, production assembly 10"' differs from production assembly 10 for not requiring any turntables for feeding blowing unit 12 with the pre-forms.

Furthermore, production assembly 10"' differs from production assembly 10 for comprising, proceeding from blowing unit 12 to filling unit 13, a second transfer device 1b"' which directly receives articles 5 from star wheel 31"' at station I"' and directly feeds articles 5 to filling unit 13 at station O"' of work portion W.

More precisely, production assembly 10"' differs from production assembly 10 for not requiring any turntable for discharging articles 5 from blowing unit 12.

According to a not shown alternative, production assembly 10"' could comprise a first star-wheel interposed between first transfer device 1a"' and blowing unit 12 and a second star-wheel interposed between blowing unit 12 and second transfer device 1b"'.

The operation of production assembly 10"' is similar to production assembly 10 and is described only insofar as it differs from that of production assembly 10.

In particular, star wheel 30"' transfers pre-form from oven 11 to transfer device 1a"'.

Transfer device 1a"' receives pre-forms at inlet station I"', conveys pre-forms along work portion W"' of path P"' and feeds star-wheel 31 with pre-forms.

Blowing unit 12 blows articles 5 from respective pre-forms, as the latter are conveyed by star-wheel 31.

Transfer device 1b"' receives articles 5 from star-wheel 31"' at station I"' of relative path P"' and conveys articles 5 along path P"'.

With reference to Figure 8, 10"" indicates, as a whole, a fifth embodiment of a production assembly for the production of articles 5 incorporating transfer device 1 according to the present invention.

Production assembly 10"" is similar to production assembly 10 and will be described hereinafter only as far as it differs therefrom; corresponding or equivalent parts of production assemblies 10, 10"" will be indicated where possible by the same reference numbers.

Production assembly 10"" differs from production assembly for comprising a labelling unit 15"" which comprises, in turn,: a plurality of stationary labelling heads 50"", which are arranged peripherally about an axis B"" of labelling unit 15"".

Labelling heads 50"" can be set in a rest configuration or in an operative configuration, in which they apply respective labels to relative articles 5.

Furthermore, production assembly 10"" differs from production assembly 10 for comprising:
- a first transfer device 1a"", which is arranged upstream of labelling unit 15"", conveys a first number of articles 5 to be labelled at a first speed along work portion W"" of path P1"", and discharges articles 5 to be labelled at station O"" of portion W"" of path P1"";
- a second transfer device 1b"", which is arranged at labelling unit 15"", receives articles 5 to be labelled from first transfer device 1a"" at inlet station I"" of labelling path P2"", conveys a second number of articles 5 at a second speed along work portion W"" of labelling path P2"", and discharges labelled articles 5 at outlet station O"" of labelling path P2""; and
- a third transfer device 1c"", which receives a second number of labelled articles 5 from transfer device 1b"" at station I"" of work portion W"" of path P3"", conveys that second number of labelled articles 5 along work portion W"" of path P3"" at a second speed, and discharges labelled articles 5 at outlet station O"" of path P3"".

Labelling heads 50"" are:
- either carried by stator 18 and, therefore, rotationally stationary with respect to axis B " " ; or
- movable independently of transfer device 1b"".

In particular, labelling heads 50"" could be carried by a not-shown further transfer device.

When transferring gripping devices 4 and corresponding filled articles 5 to be labelled along labelling path P2"", transfer elements 3 are controllable to:
- stop/arrange articles 5 substantially at labelling heads 50"" before the labelling of articles 5 and for the time necessary to apply labels onto respective articles 5; and
- convey filled and labelled articles 5 outside labelling unit 15"".

Furthermore, labelling heads 50"" are set in the rest position when transfer elements 3 advance relative articles 5 along labelling path P"" upstream or downstream of such labelling heads 50"".

Labelling heads 50"" are set in the operative position after transfer elements 3 have stopped/advanced relative articles 5 at such labelling heads 50"".

In this way, as they stop/advance along labelling path P2"", articles 5 are labelled by respective labelling heads 50"".

In particular, labelling heads 50" could be adapted to apply and release pre-formed and longitudinally sealed "sleeve" labels onto respective articles 5, while the latter are raised parallel to a vertical axis.

The operation of production assembly 10"" is similar to production assembly 10 and is described only insofar as it differs from that of production assembly 10.

In particular, transfer elements 3 of transfer device 1a"" feeds transfer device 1b"" with articles 5 to be labelled at station O"" of path P1"".

Transfer elements 3 of transfer device 1b"" move articles 5 to labelled along work portion W of path P2"" from station I"" to station O"".

Control unit 9 stops/arrange transfer elements 3 at labelling heads 50"" and the latter apply labels onto relative articles 5.

Afterwards, control unit 9 advances again transfer elements 3 of transfer device 1b"" towards station O""' of labelling path P2"", where labelled articles 5 are unloaded from transfer device 1b"" and loaded on transfer device 1c"".

From an analysis of the features of transfer device 1; 1'; 1"; 1a"', 1b"'; 1a"", 1b"", 1c"" made according to the present invention, the advantages it allows to obtain are apparent.

In particular, transfer device 1; 1'; 1"; 1a"', 1b"'; 1a"", 1b"", 1c"" are self-movable and movable independently of each other and support articles 5.

Accordingly, each transfer element transfer device 1; 1'; 1a"', 1b"'; 1a"", 1b"", 1c""' may move along respective track 2, 2' with a specific motion law and with a specific trajectory.

In this way, it is possible to convey pre-forms and/or articles 5 with different speeds and with different pitches therebetween by simply changing the motion law of transfer device 1; 1'; 1"; 1a"', 1b"'; 1a"", 1b"", 1c""'.

Furthermore, due to the fact that gripping element 4 also support articles 5, it is no longer necessary to use a linear conveyor for support articles and to use two lateral conveyors as in the solution shown in US-A-2012/0261233.

As a result, it is possible to convey articles 5 along trajectory of different shapes, especially along curved trajectory.

In other words, transfer device 1; 1'; 1"; 1a"', 1b"'; 1a"", 1b"", 1c""' can convey articles 5 along the same trajectory as star-wheels, differently from the solution shown in US-A-2012/0261233.

With reference to production assembly 10 (Figure 3), transfer devices 1a, 1b are particularly advantageous, because they allow to combine labelling unit 15 and capping unit 14 which process articles 5 with different speed and pitches.

Furthermore, production assembly 10 requires only two star wheels 20, 21 for conveying articles 5 from blowing unit 12 to labelling unit 15, differently from the known customary solution discussed in the introductory part of the present description.

With reference to production assembly 10' (Figure 4 to 6), transfer devices 1' allows to create a storage of articles 5 upstream of blowing unit 12.

In this way, in case of interruption of the operation of production assembly 10' upstream of blowing unit 12, it is no longer necessary to waste a certain number of pre-forms, but it is necessary only to convey articles 5 along path P' and slow down or even stop transfer elements 3 along path P' (Figure 5).

With reference to production assembly 10" (Figure 6), only one transfer device 1 is used for moving articles 5 from station I" to station O" along work portion W" of path P".

In greater detail, each pre-form/article 5 is conveyed by only one respective transfer elements 3 inside blowing unit 12, filling unit 13", capping unit 14 and labelling unit 15".

As a result, the speed of the articles 5 and the pitch therebetween is fully controllable along the whole work portion W" of path P.

Furthermore, articles 5 are received by transfer elements 3 at station I" only and released at station O" only, without any exchange between rotary elements as in the known solution disclosed in the introductory part of the present description.

In this way, the flexibility and the rate of production assembly 10" is enhanced with respect to the known solution disclosed in the introductory part of the present description.

Filling heads 40" of filling unit 13" are either arranged on stator 16 - and, therefore, stationary - or move separately and independently from articles 5 conveyed inside filling unit 13" by transfer devices 3.

In the same way, labelling heads 50" of labelling unit 15" are arranged on stator 18 - and therefore stationary - or move separately and independently from articles 5 conveyed inside labelling unit 15" by transfer devices 3.

As a result, filling unit 13" and labelling unit 15" substantially comprise a limited number of rotating parts necessary for filling articles 5 with pourable product or labelling articles 5.

In this way, there is no substantially a reduced need of supplying air and/or gas and/or food product/labels to rotating operative heads, thus dramatically simplifying the overall design of filling unit 13" and labelling unit 15" in comparison with that of the known solution disclosed in the introductory part of the present description.

With reference to production assembly 10"' (Figure 7), transfer device 1a"' feeds blowing unit 12 with pre-forms and transfer device 1b"' is fed by blowing unit 12 with articles 5.

Accordingly, the loading of blowing unit 12 with pre-forms and the discharging of articles 5 from blowing unit 12 are made simpler and require a reduced number of components than the known solution disclosed in the introductory part of the present description.

With reference to production assembly 10"" (Figure 8), labelling heads 50"" of labelling unit 15"" are arranged on stator 18 and articles 5.

Accordingly, likewise labelling unit 15", there is a reduced need for supplying air and/or gas and/or food product to rotating labelling heads 50, thus dramatically simplifying the overall design of labelling unit 15"" in comparison with known solution disclosed in the introductory part of the present description.

Clearly, changes may be made to transfer device 1; 1'; 1"; 1a"', 1b"'; 1a"", 1b"", 1c"" as described and illustrated herein without, however, departing from the scope as defined in the accompanying claims.

In particular, labelling unit 15, 15", 15"" could be arranged downstream of capping unit 14 inside production assembly 10, 10', 10", 10"', 10"".

Furthermore, filling unit 13" and labelling unit 15" could respectively fill or apply labels onto articles 5 conveyed by transfer device 1.

## Claims

1. A transfer device (1; 1'; 1"; 1a"', 1b"'; 1a"", 1b"", 1c""') for transferring at least two articles (5) along a path (P), comprising:
- a stationary track (2; 2'); and
- at least two transfer elements (3), which are self-movable along said track (2, 2') and movable independently of each other along said path (P; P'; P"; P"'; P1""; P2""; P3""), from a receiving section (I; I'; I"; I"'; I"") in which they receive respective articles (5) and a discharging section (O; O'; O"; O"'; O"") in which they discharge said respective articles (5);
**characterized by** comprising at least two gripping members (4) for gripping respective articles (5), which are operatively connected to respective transfer elements (3), and are movable along said path (P; P'; P"; P"'; P1""; P2""; P3"");
said gripping members (4) also supporting said articles (5), as the latter travel, in use, along said path (P; P'; P"; P"'; P1""; P2""; P3"").

2. The transfer device of claim 1, **characterized in that** said gripping members (4) are configured to grip said respective articles (5), only on one side thereof.

3. The transfer device of claim 1 or 2, **characterized in that** said track (2, 2') and said transfer elements (3) are magnetically coupled to one another.

4. The transfer device of any one of claims 1 to 3, **characterized in that** said path (P; P'; P"; P"'; P1""; P2""; P3"") is at least partially curved.

5. A production assembly (10, 10', 10", 10"', 10"") for carrying out at least one operation on said articles (5), **characterized by** comprising:
- at least a first operative station (12, 13, 14, 15; 13"; 15"; 15"") comprising a plurality of operative heads (40, 50; 40", 50"; 50"") adapted to carry out said operation on respective articles (5); and
- a transfer device (1; 1'; 1"; 1a"'; 1b"'; 1a"", 1b"", 1c"") according to any one of claims 1 to 4.

6. The assembly of claim 5, **characterized in that** said transfer device (1; 1'; 1"; 1a"'; 16"'; 1a"", 1b"", 1c"") is arranged upstream of or downstream of said first operative unit (12, 13, 14, 15; 13"; 15"; 15"") with reference to the advancing direction of said articles (5), so as to:
feed said first operative unit (12, 13, 14, 15; 13"; 15"; 15"") with said articles (5) onto which said operation must be still carried out; and/or
discharge from said operative unit (12, 13, 14, 15; 13"; 15"; 15"") said articles (5) onto which said operation has been carried out.

7. The assembly of claim 5 or 6, **characterized by** comprising:
- a second operative unit (13, 14, 15; 15"; 15""), which is arranged upstream of said first operative unit (12, 13, 14, 15; 13"), with reference to the advancing direction of said articles (5) along said path (P; P"; P"'; P1""; P2""; P3""); and
- a storage transfer device (1'), which defines a storage path (P') for said transfer elements (3) and which selectively intersect said path (P; P"; P"'; P1""; P2""; P3"") in a position interposed between said first operative unit (12, 13, 14, 15; 13") and said second operative unit (13, 14, 15; 15"; 15"");
said transfer device (1; 1a"', 1b"'; 1a"", 1b"", 1c""') being interposed between said first operative unit (12, 13, 14, 15; 13") and said second operative unit (13, 14, 15; 15"; 15"");
said transfer elements (3) being selectively movable:
- along only said path (P; P"; P"'; P1""; P2""; P3""), when both said first operative unit (12, 13, 14, 15; 13") and said second operative unit (13, 14, 15; 15"; 15"") carry out, in use, respectively said first operation and said second operation onto said articles (5); or
- also along said storage path (P'), when said second operation unit (13, 14, 15; 15"; 15"") has slowed down, in use, its rate or has been stopped, so as to create a storage of said articles (5) downstream of said second operative unit (13, 14, 15; 15"; 15"").

8. The assembly of any one of claim 5 to 7, **characterized in that** said operative heads (40") are filling heads for filling said articles (5) with a pourable product while said articles (5) advance, in use, along said path (P");
said heads (40") being movable independently with respect to said path (P"; P2"") or even stationary, and said transfer device (1) being movable with respect to said heads (40") along said path (P"; P2"").

9. The assembly of any one of claims 5 to 7, **characterized in that** said operative heads (50", 50"") are labelling heads for applying relative labels onto respective articles (5), while the latter advance, in use, along said path (P"; P2"");
said heads (50"; 50"") being movable independently with respect to said path (P") or even stationary, and said transfer device (1) being movable with respect to said heads (50") along said path (P").

10. The assembly of any one of claims 5 to 9, **characterized by** comprising, proceeding according to an advancing direction of said articles (5) inside said production assembly (10"'):
- a blowing station (12) for forming said articles (5) starting from corresponding pre-forms;
- a filling station (13) for fill said articles (5) with said pourable product and arranged downstream of said blowing station (12); and
- a first transfer device (1b"') according to any one of claims 1 to 4 and interposed between said blowing station (12) and said filling station (13);
said gripping members (4) of said first transfer device (1b"') receiving, in use, said articles (5) from said blowing station (12) at said receiving section (I"') and discharging said articles (5) to said filling station (13) at said discharging section (O"').

11. The assembly of claim 10, **characterized by** comprising:
- an oven (11), which is arranged upstream of said blowing station (12); and
- a second transfer device (1a"') according to any one of claims 1 to 4;
said gripping members (4) of said second transfer device (1a"') receiving said pre-forms from said oven (11) at said respective receiving section (I"') and discharging said pre-forms to said blowing station (12) at said discharging section (O"').

12. A production assembly (1") for producing a plurality of finished articles (5) filled with a pourable product starting from respective pre-forms, comprising:
- a blowing unit (12) for forming said articles (5) starting from respective pre-forms;
- a plurality of operative units (13", 14, 15") for carrying out respective operations onto said articles (5) and for outputting capped articles (5) at an outlet; and
- only one transfer device (1) according to any one of claims 1 to 4;
said path (P") defining a closed trajectory for said transfer devices (1) inside said production assembly (10"), and comprising a work portion (W") and a return portion (R");
each said gripping member (4) feeding, in use, said corresponding article (5) along said work portion (W") to said operative units (12, 13", 14, 15") and discharging said corresponding finished article (5) at said discharging station (O").

13. A filling unit (13") for filling a plurality of articles (5) with a pourable food product, **characterized by** comprising:
- a plurality of filling devices (40") for filling respective articles (5); and
- a transfer device (1") for feeding said respective articles (5) along a filling path (F", P") and arresting said respective articles (5) at said filling devices (40") during said filling operation;
said filling devices (40") being either movable independently or even stationary with respect to said filling path (F", P");
said transfer device (1) comprising:
- a stationary track (2);
- a plurality of transfer elements (3), which are self-movable along path (F", P") onto said track (2) and movable independently of each other along said path (F", P"); and
- a plurality of gripping members (4) which are adapted to grip respective said articles (5), which are operatively connected to respective transfer elements (3) and to respective said articles (5), and are movable along said path (F", P") to convey said articles (5) along said path (F", P");
said gripping members (4) also supporting, in use said articles (5), as the latter travel, in use, along said path (F", P").

14. A labelling unit (15"; 15"") for labelling a plurality of articles (5), **characterized by** comprising:
- a plurality of labelling devices (50"; 50"") for labelling respective articles (5); and
- a transfer device (1", 1b"") for feeding said respective articles (5) along a labelling path (P"; P2"") and arresting said respective articles (5) at said labelling devices (50"; 50"") during said labelling operation;
said labelling devices (50"; 50"") being either movable independently or even stationary with respect to said labelling path (L", P"; P2"");
said transfer device (1) comprising:
- a stationary track (2);
- a plurality of transfer elements (3), which are self-movable along path (L" , P"; P2"") onto said track (2") and movable independently of each other along said path (L", P"; P2""); and
- a plurality of gripping members (4), which are adapted to grip respective said articles (5), are operatively connected to respective transfer elements (3) and to respective said articles (5), and are movable along said path (L", P"; P2"") to convey said articles (5) along said path (L", P"; P2"");
said gripping members (4) also supporting said articles (5), as the latter travel, in use, along said path (L", P"; P2"").

## Amended claims

### Amended claims in accordance with Rule 137(2) EPC.

1. A production assembly (10, 10', 10", 10"', 10"") for carrying out at least one operation on said articles (5), comprising:
- a transfer device (1; 1'; 1"; 1a"'; 1b"'; 1a"", 1b"", 1c"") for transferring at least two articles (5) along a path (P);
said transfer device (1; 1'; 1"; 1a"'; 1b"'; 1a"", 1b"", 1c"") comprising, in turn,:
- a stationary track (2; 2'); and
- at least two transfer elements (3), which are self-movable along said track (2, 2') and movable independently of each other along said path (P; P'; P", F"; P"'; P1""; P2""; P3""), from a receiving section (I; I'; I"; I"'; I"") in which they receive respective articles (5) to only one discharging section (O; O'; O" ; O'''; O"") in which they discharge said respective articles (5);
- at least two gripping members (4) for gripping respective articles (5), which are operatively connected to respective transfer elements (3), and are movable along said path (P; P'; P", F''; P'''; P1''''; P2''''; P3'''');
- said gripping members (4) also supporting said articles (5), as the latter travel, in use, along said path (P; P'; P", F"; P'"; P1""; P2""; P3"");
**characterized in that** said production assembly (10, 10',10", 10"') comprises, in turn,:
- a first operative station (12, 13, 14, 15; 13") comprising a plurality of operative heads (40, 50; 40", 50"; 50"") adapted to carry out said operation on respective articles (5); and
- a second operative unit (13, 14, 15; 15"; 15""), which is arranged upstream of said first operative unit (12, 13, 14, 15; 13"), with reference to the advancing direction of said articles (5) along said path (P; P"; P'''; P1''''; P2''''; P3'''');
said transfer device (1; 1'; 1''; 1a"'; 1b"'; 1a'''', 1b'''', 1c'''') being interposed between said first operative unit (12, 13, 14, 15; 13") and said second operative unit (12, 13, 14, 15; 13");
said gripping members (4) being configured to grip said respective articles (5), only on one side thereof.

2. The production assembly of claim 1, **characterized in that** said track (2, 2') and said transfer elements (3) are magnetically coupled to one another.

3. The production assembly of any one of claims 1 or 2, **characterized in that** said path (P; P'; P", F"; P"'; P1""; P2""; P3"") is at least partially curved.

4. The assembly of any one of the foregoing claims, **characterized in that** said transfer device (1; 1'; 1"; 1a"'; 1b"'; 1a"", 1b"", 1c"") is arranged upstream of or downstream of said first operative unit (12, 13, 14, 15; 13"; 15''; 15"") with reference to the advancing direction of said articles (5), so as to:
feed said first operative unit (12, 13, 14, 15; 13"; 15"; 15"") with said articles (5) onto which said operation must be still carried out; and/or
discharge from said first operative unit (12, 13, 14, 15; 13"; 15"; 15"") said articles (5) onto which said operation has been carried out.

5. The assembly of any one of the foregoing claims, **characterized by** comprising:
- a storage transfer device (1'), which defines a storage path (P') for said transfer elements (3) and which selectively intersect said path (P; P", E"; P"'; P1""; P2""; P3"") in a position interposed between said first operative unit (12, 13, 14, 15; 13") and said second operative unit (13, 14, 15; 15"; 15"");
said transfer elements (3) being selectively movable:
- along only said path (P; P", F"; P"'; P1""; P2""; P3""), when both said first operative unit (12, 13, 14, 15; 13") and said second operative unit (13, 14, 15; 15"; 15"") carry out, in use, respectively said first operation and said second operation onto said articles (5); or
- also along said storage path (P'), when said second operation unit (13, 14, 15; 15"; 15"") has slowed down, in use, its rate or has been stopped, so as to create a storage of said articles (5) downstream of said second operative unit (13, 14, 15; 15"; 15"").

6. The assembly of any one of the foregoing claims, **characterized in that** said operative heads (40") are filling heads for filling said articles (5) with a pourable product while said articles (5) advance, in use, along said path (P");
said heads (40'') being movable independently with respect to said path (P'', F"; P2"") or even stationary, and said transfer device (1) being movable with respect to said heads (40") along said path (P"; P2'''').

7. The assembly of any one of the foregoing claims, **characterized in that** said operative heads (50", 50"") are labelling heads for applying relative labels onto respective articles (5), while the latter advance, in use, along said path (P"; P2"");
said heads (50"; 50"") being movable independently with respect to said path (P", F") or even stationary, and said transfer device (1) being movable with respect to said heads (50") along said path (P").

8. The assembly of any one of the foregoing claims, **characterized by** comprising, proceeding according to an advancing direction of said articles (5) inside said production assembly (10"'):
- a blowing station (12) for forming said articles (5) starting from corresponding pre-forms;
- a filling station (13) for fill said articles (5) with said pourable product and arranged downstream of said blowing station (12); and
- a first transfer device (1b"') according to any one of claims 1 to 4 and interposed between said blowing station (12) and said filling station (13);
said gripping members (4) of said first transfer device (1b''') receiving, in use, said articles (5) from said blowing station (12) at said receiving section (I"') and discharging said articles (5) to said filling station (13) at said discharging section (O''').

9. The assembly of claim 8, **characterized by** comprising:
- an oven (11), which is arranged upstream of said blowing station (12); and
- a second transfer device (1a"') according to any one of claims 1 to 4;
said gripping members (4) of said second transfer device (1a"') receiving said pre-forms from said oven (11) at said respective receiving section (I"') and discharging said pre-forms to said blowing station (12) at said discharging section (O"').

10. A production assembly (1") for producing a plurality of finished articles (5) filled with a pourable product starting from respective pre-forms, comprising:
- a blowing unit (12) for forming said articles (5) starting from respective pre-forms;
- a plurality of operative units (13", 14, 15") for carrying out respective operations onto said articles (5) and for outputting capped articles (5) at an outlet; and
- only one transfer device (1) according to any one of claims 1 to 4;
said path (P") defining a closed trajectory for said transfer devices (1) inside said production assembly (10"), and comprising a work portion (W") and a return portion (R");
each said gripping member (4) feeding, in use, said corresponding article (5) along said work portion (W") to said operative units (12, 13", 14, 15") and discharging said corresponding finished article (5) at said discharging station (O").

11. The production assembly (10") of any one of the foregoing claims, **characterized by** comprising:
- a filling unit (13") for filling said plurality of articles (5) with a pourable food product;
said filling unit (13") comprising a plurality of filling devices (40") for filling respective articles (5); and
said transfer device (1") feeding, in use, said respective articles (5) along a filling said path (F", P") and arresting, in use, said respective articles (5) at said filling devices (40") during said filling operation;
said filling devices (40") being either movable independently or even stationary with respect to said filling path (F", P");

12. The production assembly (10", 10"") of any one of claims 1 to 10, **characterized by** comprising a labelling unit (15"; 15"") for labelling said plurality of articles (5);
said labelling unit (15"; 15"") comprising, in turn, a plurality of labelling devices (50''; 50"") for labelling respective articles (5);
said transfer device (1", 1b"") feeding, in use, said respective articles (5) along a labelling said path (P''; P2"") and arresting, in use, said respective articles (5) at said labelling devices (50"; 50"") during said labelling operation;
said labelling devices (50''; 50"") being either movable independently or even stationary with respect to said labelling path (L", P"; P2"").
